# EUROPÄISCHE PATENTSCHRIFT

(11) **EP 2 959 655 B1**
(45) Veröffentlichungstag und Bekanntmachung des Hinweises auf die Patenterteilung: **21.12.2016**
(21) Anmeldenummer: 14706479.4
(22) Anmeldetag: 14.02.2014
(51) Int. Cl.: H04L 29/06, H04W 4/04

(54) **KRAFTFAHRZEUG MIT NACHTRÄGLICH PER ANWENDUNGSPROGRAMM VERÄNDERBAREM FAHRVERHALTEN**
MOTOR VEHICLE WITH A DRIVING BEHAVIOR WHICH CAN BE MODIFIED AT A LATER STAGE USING AN APPLICATION PROGRAM
VÉHICULE AUTOMOBILE PRÉSENTANT UN COMPORTEMENT DE CONDUITE MODIFIABLE ULTÉRIEUREMENT PAR UN PROGRAMME D'APPLICATION

(30) Priorität: 22.02.2013 DE 102013003040
(43) Veröffentlichungstag der Anmeldung: 30.12.2015
(73) Patentinhaber: Audi AG, 85045 Ingolstadt (DE)
(72) Erfinder: WILDING, Werner, 85137 Walting (DE); KRÄUTER, Thomas, 85080 Gaimersheim (DE); SCHMIDT, Walter, 86643 Rennertshofen (DE); MICHAEL, Jörg, 85055 Ingolstadt (DE); SCHÜSSLER, Martin, 85092 Kösching (DE); LANDGRAF, Johannes, 85080 Gaimersheim (DE); STAHLMANN, Rainer, 85120 Hepberg (DE); MÖLLER, Malte, 93053 Regensburg (DE)
(74) Vertreter: Brandt, Kai
(86) Internationale Anmeldenummer: PCT/EP2014/000407
(87) Internationale Veröffentlichungsnummer: WO 2014/127897

(56) Entgegenhaltungen:
- EP-A1- 1 309 132
- DE-A1- 10 123 475
- DE-U1- 20 014 381
- "White Paper Towards a Secure Automotive Platform", , 31. August 2009 (2009-08-31), XP055125020, Gefunden im Internet: URL:http://www.secunet.com/fileadmin/user_ upload/Download/Printmaterial/englisch/sn_ Whitepaper_Secure_Automotive_Platform_E.pd f [gefunden am 2014-06-24]

## Beschreibung

Die Erfindung betrifft ein Kraftfahrzeug. Das Kraftfahrzeug weist eine Kommunikationseinrichtung für eine drahtlose Datenübertragung zwischen einerseits dem Kraftfahrzeug und andererseits einem fahrzeugexternen Gerät, z.B. einem Programmiergerät einer Werkstatt oder einem Server des Internets, und/oder einem anderen Kraftfahrzeug auf. Bei der Kommunikationseinrichtung kann es sich beispielsweise um ein Mobilfunkmodul oder einem Car-2-X- oder Car-2-Car-Kommunikationsmodul handeln. Des Weiteren ist in dem erfindungsgemäßen Kraftfahrzeug eine Prozessoreinrichtung bereitgestellt, die dazu ausgelegt ist, Anwendungsprogramme auszuführen. Die Anwendungsprogramme können hierbei mit dem fahrzeugexternen Gerät über die Kommunikationseinrichtung Daten austauschen.

Ein solches Fahrzeug ist durch Computerviren und andere sogenannte Malware verwundbar, die von außen in das Kraftfahrzeug geschleust werden können und dann als Bestandteil eines Anwendungsprogramms oder als selbständiges Schadprogramm durch die Prozessoreinrichtung ausgeführt werden.

Besonders kritisch ist dies bei einem Kraftfahrzeug, das in der Lage sein soll, Fahraufgaben autonom oder zumindest teilautonom (pilotiert) zu erledigen. Fahraufgaben sind hierbei die Längsführung und/oder die Querführung des Kraftfahrzeugs. Eine Fahraufgabe kann beispielsweise das automatische Tanken, Einparken umfassen. Ein anderer Aspekt ist die automatisierte Erledigung von Aufgaben betreffend beispielsweise das Zahlen nach einem Tankvorgang per Online-Bezahlung. In den nächsten Jahren ist ein Zuwachs solcher automatisierter Aufgabenerledigungen durch ein Kraftfahrzeug zu erwarten. Auch werden Drive-by-wire-Systeme zunehmend verfügbar, d. h. die Bremse und die Lenkung werden unabhängig von der Mechanik durch ein elektronisches Steuergerät betätigt. Die Steuersignale der Steuergeräte werden durch Kennfelder, Sensoren und Software beeinflusst.

Kraftfahrzeuge der beschriebenen Art sind besonders anfällig für eine Manipulation durch ein schadhaftes Anwendungsprogramm. Durch Einfluss von außen können Funktionen in den Antriebskomponenten und in der Sensorik fehlerhaft werden. Damit verbunden ist dann die Gefahr für andere Verkehrsteilnehmer und auch die Passagiere des betroffenen Kraftfahrzeugs. Durch Malware kann das Fahrzeugverhalten bewusst beeinflusst werden, können persönliche Daten der Passagiere ausspioniert werden und auf Regelkreise oder Kennfelder von außen zugegriffen und so beispielsweise ein Drive-by-wire-System auch beeinflusst werden.

Aus der DE 101 23 475 A1 ist in diesem Zusammenhang ein Multimediasystem für ein Kraftfahrzeug bekannt, das einen Fahrzeugrechner aufweist, auf welchem Software zur Interaktion der Fahrzeugkomponenten mit Peripherieeinrichtungen installiert ist. Davon logisch getrennt ist ein Applikationsrechner bereit gestellt, der einem Benutzer einen Zugriff auf externe Multimediadienste gestattet, wozu der Applikationsrechner entsprechende Applikationen, d. h. Anwendungsprogramme, ausführt. Die Trennung zwischen dem Fahrzeugrechner, der Zugriff auf Steuergeräte und andere Komponenten des fahrzeuginternen Netzwerks hat, und dem mit der Außenwelt in Kontakt stehenden Applikationsrechner ist durch eine Firewall bewerkstelligt. Über diese Firewall können der Fahrzeugrechner und der Applikationsrechner Daten austauschen, wenn dies durch eine entsprechende Filterregel der Firewall zugelassen ist.

Der Applikationsrechner mit den Anwendungsprogrammen, die mit externen Datendiensten kommunizieren, bildet eine erste Kommunikationszone, für die bestimmte Regeln für den Datenaustausch mit den externen Datendiensten gelten. Der Fahrzeugrechner mit den damit vernetzten Steuergeräten auf der anderen Seite der Firewall bildet eine zweite Kommunikationszone, zu welcher man von außerhalb des Kraftfahrzeugs aus nur durch die Firewall hindurch gelangt. Nachteilig bei der Verwendung einer Firewall ist, dass diese nicht gegen solche Schadprogramme schützt, die es schaffen, in der ersten Kommunikationszone ein Anwendungsprogramm zu manipulieren, das in der Firewall als zugelassenes Anwendungsprogramm registriert ist. Auch schützt eine Firewall nicht vor Bedienungsfehlern, wenn also beispielsweise ein Mechaniker in einer Werkstatt mittels eines schadfreien Anwendungsprogramms durch die Firewall hindurch auf den Fahrzeugrechner in der zweiten Kommunikationszone zugreift, um beispielsweise ein Steuergerät neu zu konfigurieren. Kommt es hierbei zu einem Konfigurationsfehler, so kann sich ebenfalls ein unerwünschtes Fahrverhalten des Kraftfahrzeugs ergeben, ohne dass dies durch die Firewall verhindert werden konnte.

Im Zusammenhang mit einer Car-2-Car-Kommunikation, also einem Datenaustausch mit einem anderen Kraftfahrzeug, besteht die Gefahr, dass dieses andere Kraftfahrzeug z.B. wegen einer defekten Sendeeinheit sicherheitsrelevante Fehlinformationen an das eigene Kraftfahrzeug überträgt, wie etwa ein sinnloses Kommando während eines Überholmanövers, so dass sich das eigene Kraftfahrzeug unter Umständen selbst still legt.

Der Erfindung liegt die Aufgabe zugrunde, einen Schutz gegen eine unerwünschte Manipulation bei einem Kraftfahrzeug bereitzustellen, dessen Fahrverhalten sich nachträglich mittels eines Anwendungsprogramms oder sogar über eine Datenverbindung mittels eines fahrzeugexternen Geräts und/oder eines anderen Kraftfahrzeugs beeinflussen lässt.

Die Aufgabe wird durch ein Kraftfahrzeug gemäß Patentanspruch 1 und ein Verfahren gemäß Patentanspruch 12 gelöst. Vorteilhafte Weiterbildungen der Erfindung sind durch die Unteransprüche gegeben.

In dem erfindungsgemäßen Kraftfahrzeug sind ebenfalls zwei Kommunikationszonen ausgebildet. Von der ersten Kommunikationszone aus können Anwendungsprogramme, die darin von einer Prozessoreinrichtung ausgeführt werden, Daten mit einem fahrzeugexternen Gerät und/oder einem andere Kraftfahrzeug über eine Kommunikationseinrichtung austauschen. So kann die Prozessoreinrichtung z.B. ein Infotainmentsystem umfassen, welches Anwendungsprogramme z.B. für die Navigation ausführt und hierbei z.B. aktuelle Verkehrsdaten aus dem Internet empfängt. Die Daten werden drahtlos übertragen, d. h. bei der erwähnten Kommunikationseinrichtung kann es sich beispielsweise um ein Mobilfunkmodul, eine Bluetooth-Schnittstelle, eine NFC-Schnittstelle (NFC - nearfield communication), eine WLAN-Schnittstelle (WLAN - Wireless Local Area Network), eine WiFi-Schnittstelle oder eine Car-2-X-Kommunikationseinheit handeln.

Getrennt von der ersten Kommunikationszone ist in einer zweiten Kommunikationszone des Fahrzeugs eine Speichereinrichtung für Fahrzeug-Steuerdaten bereitgestellt, also solche Daten, durch welche ein Fahrverhalten des Kraftfahrzeugs festgelegt ist. Solche Fahrzeug-Steuerdaten können z.B. Kennfelddaten für ein Kennfeld eines Steuergeräts, wie etwa eines Motorsteuergeräts oder eines Drive-by-wire-Steuergeräts sein. Auch Parameterwerte zum Konfigurieren beispielsweise eines Sensors und können umfasst sein. Unter Fahrzeug-Steuerdaten werden auch Kommandos von anderen Fahrzeugen verstanden, die im Rahmen einer Car-2-Car-Kommunikation empfangen worden sind und an einen Befehlsspeicher eines Steuergeräts in der zweiten Kommunikationszone weitergeleitet werden sollen.

Erfindungsgemäß sind die beiden Kommunikationszonen nun aber nicht durch eine Firewall voneinander getrennt, die immer dann einen Zugriff eines Anwendungsprogramms aus der ersten Kommunikationszone auf die Fahrzeug-Steuerdaten im Speicher der zweiten Kommunikationszone zulässt, wenn das Anwendungsprogramm autorisiert ist. Vielmehr ist bei dem erfindungsgemäßen Kraftfahrzeug vorgesehen, dass die erste und die zweite Kommunikationszone über eine Überwachungseinrichtung gekoppelt sind, beispielsweise einen Mikrokontroller oder einen ASIC (ASIC - Application Specific Integrated Circuit), die dazu ausgebildet ist, die übertragenen Daten selbst zu überprüfen. Es wird also nicht der Sender der Daten, d.h. das Anwendungsprogramm, sondern der Inhalt der Daten überprüft. Wann immer ein Anwendungsprogramm von der ersten Kommunikationszone aus in die zweite Kommunikationszone neue Daten zu übertragen versucht, leitet die Überwachungseinrichtung diese neuen Daten nur dann in die zweite Kommunikationszone weiter, falls die Überwachungseinrichtung erkennt, dass die neuen Daten zu einem sicheren Fahrverhalten des Kraftfahrzeugs führen. Hierzu ist in der Überwachungseinrichtung ein entsprechendes Sicherheitskriterium vorgegeben. Mit anderen Worten werden nur solche Daten in die zweite Kommunikationszone weitergeleitet, die das Sicherheitskriterium erfüllen.

Das erfindungsgemäße Kraftfahrzeug weist den Vorteil auf, dass neue Daten unabhängig vom Absender unmittelbar selbst auf ihre Konsistenz oder Plausibilität hin überprüft werden. Das Kraftfahrzeug schützt sich so selbst vor einem Systemzustand, der ein gefährliches Fahrverhalten hervorgerufen könnte. Somit ist das Kraftfahrzeug selbst sogar gegen einen Bedienfehler geschützt, wenn ein Servicemechaniker mit einem zugelassenen Anwendungsprogramm versehentlich falsche Fahrzeug-Steuerdaten in den Speicher in der zweiten Kommunikationszone schreiben möchte.

Entsprechend erstreckt die zweite Kommunikationszone bevorzugt auf solche Komponenten des Kraftfahrzeugs, welche für einen Fahrbetrieb des Kraftfahrzeugs nötig sind. Dann sind all diejenigen Fahrzeug-Steuerdaten durch die Überwachungseinrichtung geschützt, die zwar einerseits vor einer unerwünschten Veränderung geschützt werden sollen, die aber andererseits auch nach der Herstellung des Kraftfahrzeugs, wenn sich das Kraftfahrzeug in Besitz eines Endbenutzers befindet, noch veränderbar sein sollen. Mit anderen Worten handelt es sich bei der Speichereinrichtung für die Fahrzeug-Kommunikationsdaten um all diejenigen Speicherbereiche, die sich in den unterschiedlichen Komponenten befinden.

So kann es sich bei den Komponenten beispielsweise um eine oder mehrere aus den folgenden handeln: ein fahrsicherheitsrelevantes Steuergerät, ein Steuergerät für eine Fahrdynamikregelung, einen Kennfeldspeicher für ein solches Steuergerät, einen Sensor, ein Bordnetz für eine Stromversorgung, ein Drive-by-wire-Steuergerät, ein Steuergerät für eine pilotierte und/oder autonome Fahrt.

Das Sicherheitskriterium, nach welchem die Überwachungseinrichtung die neuen Daten überprüft, kann in vielfältiger Weise ausgestaltet sein. Es hängt davon ab, welcher Typ von Daten mit ihm überprüft wird.

Eine Weiterbildung des erfindungsgemäßen Kraftfahrzeugs sieht hier vor, die neuen Daten mit zumindest einem im Fahrzeug abgelegten Rahmenkennfeld zu vergleichen. Mit anderen Worten müssen sich die neuen Daten in einem vorbestimmten Werteintervall befinden. Die Ränder dieses Werteintervalls sind durch ein oder mehrere Rahmenkennfelder festgelegt. Versucht dann ein Benutzer, in einem Kennfeldspeicher in der zweiten Kommunikationszone neue Daten zu speichern, die bei Verwendung als Fahrzeug-Steuerdaten zu einem Steuerwert außerhalb eines durch das zumindest eine Kennfeld definierten Bereichs führen würden, dann wird die Übertragung dieser neuen Daten in die zweite Kommunikationszone durch die Überwachungseinrichtung blockiert. Diese Ausführungsform weist den Vorteil auf, dass ein Nutzer immer noch verhältnismäßig frei einen Verlauf eines Kennfelds definieren kann, ohne hierbei seine eigene Sicherheit oder die Sicherheit anderer Verkehrsteilnehmer zu gefährden oder aber auch eine Komponente des Kraftfahrzeugs durch einen Betrieb mit falschen Fahrzeug-Steuerdaten zu beschädigen.

Ein besonders guter Schutz gegen eine ungewollte Veränderung ergibt sich dagegen, wenn in dem Kraftfahrzeug mehrere vorinstallierte, auswählbare Kennfelder gespeichert sind. Die Überwachungseinrichtung funktioniert dann als virtueller Schalter. Mit anderen Worten werden durch die neuen Daten in diesem Fall nicht beliebige neue Fahrzeug-Steuerdaten definiert. Vielmehr schaltet die Überwachungseinrichtung auf Grundlage der neuen Daten eine oder mehrere der vorinstallierten Kennfelder frei, so dass sie für eine Verwendung als Fahrzeug-Steuerdaten in dem Kraftfahrzeug aktiviert sind.

Eine besonders flexible Möglichkeit, durch neue Daten das Fahrverhalten des Kraftfahrzeugs festzulegen, ergibt sich gemäß einer Ausführungsform, bei welcher die Überwachungseinrichtung dazu ausgelegt ist, auf Grundlage der neuen Daten zunächst eine Simulation eines sich durch die neuen Daten ergebenden Fahrverhaltens durchzuführen. Ein Benutzer kann dann beliebige neue Daten mittels eines Anwendungsprogramms von der ersten Kommunikationszone in die zweite Kommunikationszone übertragen. Die Überwachungseinrichtung überprüft dann durch eine Simulation, ob diese Daten plausibel sind. Die neuen Daten werden dabei nur dann weitergeleitet, also als neue Fahrzeug-Steuerdaten in der Speichereinrichtung der zweiten Kommunikationszone abgelegt, falls sich gemäß einem vorbestimmten Plausibilitätskriterium ein zuverlässiges Fahrverhalten ergibt. Welches Plausibilitätskriterium hierbei zugrunde zu legen ist, ist dabei natürlich davon abhängig, welche Fahrzeug-Steuerdaten konkret verändert werden. Hier kann der Fachmann auf Wissen zurückgreifen, das im Zusammenhang mit der Simulation eines Betriebs eines Steuergeräts vorhanden ist.

In Weiterbildung des erfindungsgemäßen Kraftfahrzeugs ist eine weitere Kommunikationszone bereitgestellt, also eine dritte Kommunikationszone. Die dritte Kommunikationszone ist mit der ersten Kommunikationszone ebenfalls über die Überwachungseinrichtung gekoppelt. In der dritten Kommunikationszone befindet sich ein Speicher für Fahrzeug- und/oder personenbezogene Geheimdaten, wie sie z.B. für eine Online-Bezahlung und/oder für eine Online-Dienstleistung verwendet werden. Die Überwachungseinrichtung schützt dabei vor einem unautorisiertem Datenzugriff von der ersten Kommunikationszone aus auf diese Geheimdaten in der dritten Kommunikationszone. Hierzu ist die Überwachungseinrichtung dazu ausgebildet, den Datenzugriff von der ersten in die dritte Kommunikationszone nur mit einem gültigen Authentifizierungscode zuzulassen. Hierdurch ergibt sich eine vorteilhafte Unterstützung eines Benutzers des Kraftfahrzeugs durch eine gesicherte Identifizierung bei Transaktionen und Online-Dienstleistungen, also beispielsweise der automatisierten Bezahlung von Kraftstoff an einer Tankstelle. Bei dem Authentifizierungscode handelt es sich bevorzugt um einen anonymisierten Code, der keinen Rückschluss auf die Identität der Bedienperson zulässt.

Hierzu kann beispielsweise die Überwachungseinrichtung dazu ausgelegt sein, den Authentifizierungscode auf der Grundlage eines TAN-Verfahrens (TAN - Transaktionsnummer) festzulegen. Auch eine mobile Variante, sogenannte mobile TANs, sind hierbei verwendbar, die erst bei Bedarf generiert und dann dem Benutzer z.B. per SMS (Short Message Service) zugestellt werden.

Die Überwachungseinrichtung kann zum einen dazu ausgelegt sein, den Authentifizierungscode von einer Bedienperson über ein in der ersten Kommunikationszone ausgeführtes Anwendungsprogramm zu empfangen. Mit anderen Worten kann beispielsweise über ein Infotainmentsystem des Kraftfahrzeugs eine PIN (Personal Identification Number) oder auch eine TAN abgefragt werden.

Um es aber auch einem externen Datendienst zu ermöglichen, beispielsweise Geld von einem Konto des Benutzers des Kraftfahrzeugs automatisiert abzubuchen, weil dieser etwa an einer Tankstelle getankt hat, kann die Überwachungseinrichtung in vorteilhafter Weise zum anderen dazu ausgelegt sein, den Authentifizierungscode über die Kommunikationseinrichtung beispielsweise aus dem Internet von einem externen Gerät zu empfangen, also ohne ein Zutun des Benutzers im Kraftfahrzeug.

Damit der Authentifizierungscode nicht missbraucht werden kann, nachdem er beispielsweise von einer Schadsoftware ausspioniert wurde, ist die Überwachungseinrichtung bevorzugt dazu ausgelegt, den Authentifizierungscode nach einem Gebrauch oder nach Ablauf einer bestimmten Zeitdauer zu wechseln.

Wie bereits ausgeführt gehört zu der Erfindung auch ein Verfahren. Mit diesem Verfahren wird ein Eingriff in Fahrzeug-Steuerdaten überwacht, durch welche ein Fahrverhalten des Kraftfahrzeugs festgelegt ist. Das Verfahren umfasst die von der Überwachungseinrichtung durchgeführten Schritte, um zwischen der ersten und der zweiten Kommunikationszone die neuen Daten zu überprüfen. Bei Erkennen eines Übertragungsversuchs neuer Daten von der ersten in die zweite Kommunikationszone werden durch die Überwachungseinrichtung die neuen Daten daraufhin überprüft, ob sich bei Verwendung der neuen Daten als Fahrzeug-Steuerdaten ein durch ein Sicherheitskriterium definiertes sicheres Fahrverhalten des Kraftfahrzeugs ergibt. Die Übertragung durch die Überwachungseinrichtung wird nur dann zugelassen, falls die neuen Daten dieses Sicherheitskriterium erfüllen.

Zu der Erfindung gehören auch Weiterbildungen des erfindungsgemäßen Verfahrens, welche Merkmale aufweisen, die bereits im Zusammenhang mit den Weiterbildungen des erfindungsgemäßen Kraftfahrzeugs beschrieben wurden. Aus diesem Grund sind die entsprechenden Weiterbildungen des erfindungsgemäßen Verfahrens hier nicht noch einmal beschrieben.

Im Folgenden ist die Erfindung noch einmal anhand eines konkreten Ausführungsbeispiels erläutert. Hierzu zeigen:
- Fig. 1: eine schematische Darstellung der logischen Struktur eines Datennetzwerks einer Ausführungsform des erfindungsgemäßen Kraftwagens und
- Fig. 2: eine Skizze zur Veranschaulichung unterschiedlicher Kategorien, in welche Anwendungsprogramme des Kraftwagens von Fig. 1 unterteilt sein können.

Bei den im Folgenden erläuterten Ausführungsbeispielen stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

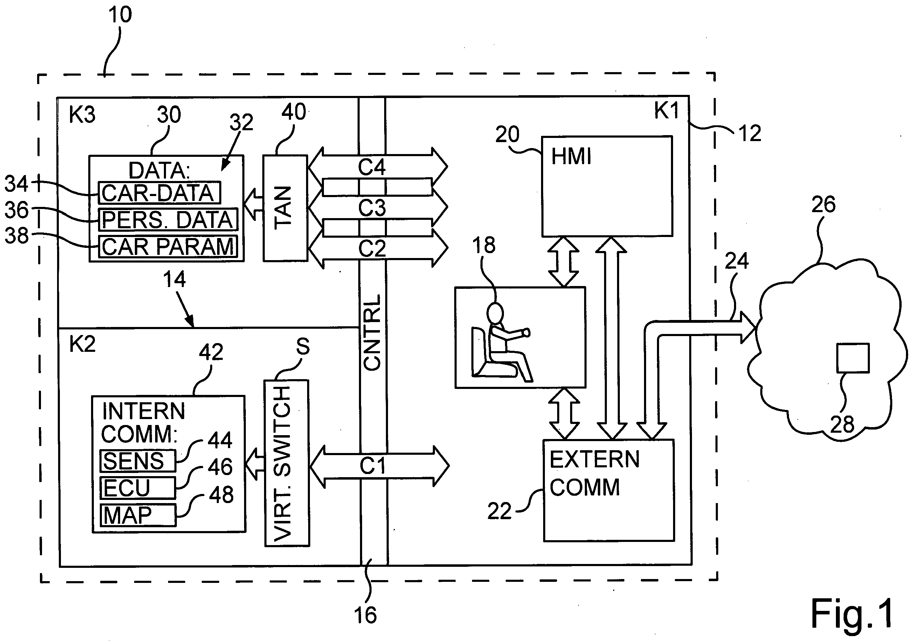

In Fig. 1 ist von einem Kraftfahrzeug 10 schematisch ein Datennetzwerk 12 gezeigt. Das Datennetzwerk 12 ist in dem gezeigten Beispiel in drei verschiedene Kommunikationszonen K1, K2, K3 eingeteilt. Jede Kommunikationszone zeichnet sich dadurch aus, dass ein Datenaustausch zwischen Steuerprogrammen von Steuergeräten, Anwendungsprogrammen oder logischen Schaltungen untereinander innerhalb einer jeweiligen Kommunikationszone K1, K2, K3 jeweils frei, d.h. ohne zusätzliche Überwachung durch weitere Steuergeräte, erfolgt. Die Kommunikation innerhalb einer der Kommunikationszonen K1, K2, K3 wird also durch die Anwendungen selber kontrolliert.

Jede Kommunikationszone kann dabei sowohl schaltungstechnische Komponenten als auch Programme umfassen. Es kann sich bei einer der Kommunikationszonen K1, K2, K3 z.B. um einen oder mehrere Computer oder Steuergeräte handeln, die untereinander beispielsweise über einen Datenbus oder ein Ethernet vernetzt sind. Es können aber auch innerhalb eines einzelnen Computers Anteile zweier Kommunikationszonen realisiert sein. Wird beispielsweise ein Anwendungsprogramm in einer dieser Kommunikationszonen ausgeführt und ein zweites Anwendungsprogramm in einer zweiten dieser Kommunikationszonen, so kann in an sich bekannter Weise durch virtuelle Umgebungen, wie sie beispielsweise durch Virtualisierung von Betriebssystemen möglich sind, so können diesen beiden Anwendungsprogramme logisch voneinander getrennt sein, wodurch sich dann ebenfalls eine Trennung in die zwei Kommunikationszonen ergibt. Ein Beispiel hierfür ist das Produkt "VMware" ® des gleichnamigen Unternehmens.

Zwischen den Kommunikationszonen ist ein freier Datenaustausch dagegen nicht möglich. In dem gezeigten Beispiel von Fig. 1 ist eine direkte Kommunikation zwischen den Kommunikationszonen K2 und K3 durch eine Kommunikationsgrenze 14 sogar vollständig unterbunden. Mit anderen Worten gibt es keine Kommunikationsverbindung, wie etwa ein Kommunikationskabel, über welches Daten zwischen der Kommunikationszone K2 und der Kommunikationszone K3 ausgetauscht werden könnten. Die Kommunikationszone K1 ist aber sowohl mit der Kommunikationszone K2 als auch mit der Kommunikationszone K3 über eine Überwachungseinrichtung 16 verbunden. Hierdurch ist ein im Folgenden näher erläuterter Datenaustausch zwischen diesen Kommunikationszonen möglich, der nicht frei, sondern überwacht abläuft.

In der Kommunikationszone K1 kann sich beispielsweise eine Mensch-Maschine-Schnittstelle (HMI) oder kurz Schnittstelle 20 des Kraftfahrzeugs 10 befinden, wie sie beispielsweise durch ein Infotainmentsystem und einen zugehörigen Bildschirm realisiert sein kann. Ein Fahrer 18 kann über die Schnittstelle 20 die an sich bekannten Datendienste des Kraftfahrzeugs 10 nutzen, also beispielsweise Radio hören, navigieren, die Komfortelektronik bedienen. In der Kommunikationszone K1 kann auch eine Kommunikationseinheit 22 für einen Datenaustausch mit der Fahrzeugumgebung (EXTERN COMM) angeordnet sein. Beispielsweise kann die Kommunikationseinheit 22 eine Car-2-X-Kommunikationseinheit, ein Mobiltelefon, ein WLAN- oder ein WiFi-Kommunikationsmodul umfassen. Mittels der Kommunikationseinheit 20 kann insbesondere eine Datenverbindung 24 zum Internet 26 bereitgestellt sein. Hierdurch ist ein Datenaustausch zwischen Anwendungsprogrammen der Kommunikationszone K1 und einem externen Datenserver des Internets 26 möglich, also einem Internetserver 28. Hierbei wird das Kraftfahrzeug 10 gegenüber einem unberechtigten Zugriff über die Datenverbindung 24 von außerhalb über an sich bekannte, herkömmliche Schutzprotokolle abgeschirmt, deren genaue Realisierung aber nicht Gegenstand der Erfindung ist und hier deshalb nicht beschrieben ist.

Die Kommunikationszone K2 kann beispielsweise das fahrzeuginterne Kommunikationsnetz 42 (INTERN COMM) umfassen, über welches Sensoren 44 (SENS), Steuergeräte 46 (ECU) und Kennfeldspeicher 48 (MAP) miteinander verbunden sind. Natürlich sind auch die Komponenten 44, 46, 48 dann selbst mit Bestandteil der Kommunikationszone K2. Jede der Komponenten 44, 46, 48 kann einen eigenen Speicher für Fahrzeug-Steuerdaten umfassen. Durch entsprechendes Abspeichern von geeigneten Steuerdaten kann das Betriebsverhalten der Komponenten 44, 46, 48 verändert werden. Dies ist bei dem Kraftfahrzeug 10 auch nachträglich möglich, nachdem das Kraftfahrzeug 10 bereits an einen Benutzer ausgeliefert worden ist.

Zum Verändern des Betriebsverhaltens kann vorgesehen sein, dass beispielsweise in einem Kennfeldspeicher 48 mehrere unterschiedliche Kennfelder für das Einstellen des Fahrverhaltens des Kraftfahrzeugs 10 gespeichert sind, aber nur eines dieser Kennfelder momentan aktiv ist. Durch einen virtuellen Schalter S (VIRT. SWITCH) kann dann zwischen diesen Kennfeldern umgeschaltet werden und hierdurch das Fahrverhalten des Kraftfahrzeugs 10 verändert werden. Beispielsweise kann es sich bei einem solchen Kennfeld um eine Motorsteuerkennlinie handeln. Durch Wechseln zwischen zwei unterschiedlichen Kennlinien kann dann das Ansteuerverhalten eines Motorsteuergeräts des Kraftfahrzeugs 10 verändert werden. Das Umschalten mittels des virtuellen Schalters S kann dabei durch einen entsprechenden Steuerbefehl erfolgen. Der Steuerbefehl wird beispielsweise von einem Kraftwagenhersteller nach entsprechendem Kauf eines Fahrdynamikpakets beispielsweise von dem Internetserver 28 aus über die Datenverbindung 24 an den virtuellen Schalter S gesendet. Der virtuelle Schalter S kann beispielsweise ein Programmmodul umfassen, das in dem Kennfeldspeicher 48 das aktuelle Kennfeld als ungültig und das ausgewählte Kennfeld als das neue gültige Kennfeld markieren kann.

Sobald versucht wird, diesen Steuerbefehl von der Kommunikationszone K1 in die Kommunikationszone K2 zu übertragen, wird dies wieder durch die Überwachungseinrichtung 16 erkannt und dann zunächst überprüft, ob zu einer gültigen Kennlinie umgeschaltet werden soll. Durch die Überwachungseinrichtung 16 wird ein Umschaltbefehl beispielsweise dann als gültig erkannt, wenn er von einem authentifizierten Internetserver 28 ausgesendet wurde.

Erst wenn die Überwachungseinrichtung 16 die Gültigkeit des Umschaltbefehls verifiziert hat, wird der Umschaltbefehl an den virtuellen Schalter S weitergeleitet. Genauso können in Sensoren 44 und Steuergeräten 46 mehrere Parametersätze gespeichert sein, zwischen denen dann mittels des virtuellen Schalters S umgeschaltet werden kann, der dann entsprechende Programmmodule oder logische Schaltungen für diese Komponenten 44, 46 umfassen kann.

In der Kommunikationszone K3 kann sich eine Speichereinrichtung 30 befinden, in welcher Geheimdaten (DATA) gespeichert sein können, deren Austausch mit beispielsweise dem Internetserver 28 nur mit Zustimmung des Benutzers 18 oder nur für den Fall erfolgt, dass der Internetserver 28 zuvor autorisiert worden ist. Die Geheimdaten können beispielsweise die Fahrzeugidentitätsnummer 34 (CAR DATA), persönliche Daten 36 (PERS DATA), wie beispielsweise eine Kontonummer, und Parameterwerte zum aktuellen Fahrzeugzustand 38 (CAR PARAM) umfassen. Auf die Geheimdaten 32 kann in dem gezeigten Beispiel nur von der Kommunikationszone K1 aus zugegriffen werden, wenn eine korrekte TAN 40 von der zugreifenden Anwendung oder von dem Benutzer 18 eingegeben wurde. Dies wird durch die Überwachungseinrichtung 16 überprüft. Die Überwachungseinrichtung 16 kann hierzu beispielsweise durch einen Mikrocontroller, einen ASIC oder aber auch durch ein Programmmodul realisiert sein, über welches der Datenverkehr zwischen der Kommunikationszone K1 und der Kommunikationszone K3 geführt wird.

Grundsätzlich ist durch den beschriebenen Aufbau des Datennetzwerks 12 verhindert, dass Steuerbefehle und/oder Schadprogramme einen direkten Zugriff auf die Steuergeräte 46; Sensoren 44 und Kennfelder 48 des Kraftfahrzeugs 10 erhalten. Durch die Kommunikationszonen K1, K2, K3 ergeben sich unterschiedliche Stufen der gewünschten und geschützten Kommunikation innerhalb und außerhalb des Kraftfahrzeugs 10. Damit wird verhindert, dass ein Zugriff von außerhalb des Kraftfahrzeugs 10 beispielsweise zu einer Abschaltung des Kraftfahrzeugs 10 (sogenannte Fail-Save-Regelung) und/oder zu einer nachhaltigen Einflussnahme auf das Fahrverhalten führt.

Um zu vermeiden, dass ein Schadprogramm versehentlich indirekt einen unerwünschten Zugriff auf eine der Kommunikationszonen K2 oder K3 erhält, können einzelne Anwendungsfälle in Aktionskategorien unterteilt sein, so dass für jede Aktionskategorie eine gesonderte Kommunikationsstrategie bereitgestellt werden kann. Besonders berücksichtigt werden bevorzugt die folgenden Anwendungsfälle: die pilotierte/autonome Fahrt des Kraftfahrzeugs 10 (eigenständige Längs- und/oder Querführung durch ein Steuergerät), die Fernsteuerung des Fahrzeugs, beispielsweise im Rahmen einer Ruffunktion innerhalb eines Parkhauses und das automatisierte ein-/ausparken des Kraftfahrzeugs, automatisierte Lade- und Tankvorgänge, eine Bezahlfunktion für Dienstleistungen (Tanken oder Bezug von Informationsdaten aus dem Internet 26), der Internetzugriff zum Laden von fahrzeugbezogenen Programmfreischaltungen und Anwendungsprogramme, der Internetzugriff zum Laden von infotainmentbezogenen Programmen bzw. Inhalten, Car-2X-Funktionalitäten.

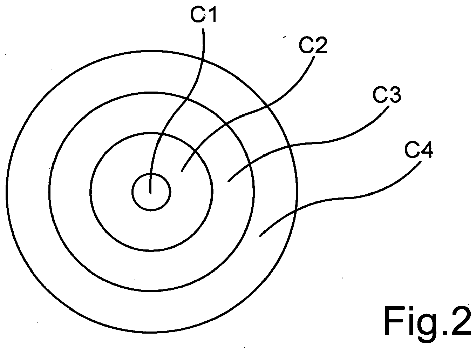

Als geeignete Aktionskategorien haben sich die folgenden vier Kategorien erwiesen, zu denen auch die Fig. 2 zur Veranschaulichung bereit gestellt ist. Eine erste Aktionskategorie C1 umfasst die eigentliche Fahrzeugsteuerung, durch welche das Fahrverhalten des Kraftfahrzeugs 10 bestimmt ist. Diese Aktionskategorie C1 betrifft diejenigen Daten und Steuerbefehle, deren Schutz am größten sein muss. Andernfalls wird die Sicherheit der Passagiere und der anderen Verkehrsteilnehmer gefährdet. Eine nächste Aktionskategorie C2 betrifft den Austausch von Fahrzeugdaten, wie sie Bestandteil der Geheimdaten 32 sein können, also der Fahrzeugdaten 24 und der Fahrzeugparameter 38. Eine weitere Aktionskategorie C3 betrifft den Austausch persönlicher Daten und der Fahrzeugidentifikation. Schließlich kann eine Aktionskategorie C4 vorgesehen sein, in welcher der Austausch von Daten betreffenden Dienstleistungen, wie beispielsweise Internetdienste betrifft, ohne dass hierbei die Identität des Benutzers 18, des Kraftfahrzeugs 10 oder sogar Steuerdaten aus der Speichereinrichtung 32 benötigt werden. Diese Aktionskategorie C4 benötigt am wenigsten Schutz.

Wie in Fig. 1 dargestellt, werden innerhalb des Fahrzeugs Anwendungsprogramme aus den unterschiedlichen Aktionskategorien immer dann, wenn sie auf ihre Daten zugreifen möchten, in unterschiedliche Kommunikationszone K2, K3 geschleust. Möchte beispielsweise ein Anwendungsprogramm aus der Aktionskategorie C2 (Austausch von Fahrzeugdaten), das beispielsweise durch die Schnittstelle 20 in der Kommunikationszone K1 ausgeführt wird, auf die eigentlichen kritischen Daten 34, 38 betreffend das Fahrzeug zugreifen, so muss es auf die Speichereinrichtung 30 in der Kommunikationszone K3 zugreifen. Hierbei wird es dann von der Überwachungseinrichtung 16 überwacht. Die Überwachungseinrichtung 16 ist in der beschriebenen Weise hierzu zwischen der Kommunikationszone K1 und den übrigen Kommunikationszonen K2, K3 installiert. Hierbei variiert die Aufgabe der Überwachungseinheit 16 je nach Kommunikationszone K2, K3. Die Aufgabe betreffend die Übertragung hin zur Kommunikationszone K3 oder aus dieser heraus betrifft das Freigeben eines Datenzugriffs, sobald eine TAN 40 zwischen dem Kraftfahrzeug 10 und einem Dienstleister, beispielsweise dem Internetserver 28, positiv abgeglichen wurde. In Bezug auf die Kommunikationszone K2 kann beispielsweise sichergestellt werden, dass neue Kennfelddaten, die von dem Kraftfahrzeug 10 empfangen wurden, mit im Kraftfahrzeug 10 abgelegten, d. h. gespeicherten Kennfeldern abgeglichen werden. Führt dieser Abgleich offensichtlich zu einem Widerspruch, d. h. die neuen Kennfelddaten können Steuerwerte außerhalb eines zulässigen Bereichs bei der Steuerung des Kraftwagens 10 verursachen, werden diese neuen Kennfelddaten nicht in die Kommunikationszone K2 gespeichert.

Die Kommunikationszone K1 ist die am wenigsten gesicherte Kommunikationszone. Hier ist ein direkter Zugriff, beispielsweise des Benutzers 18 auf die Fahrzeugfunktionen möglich, die innerhalb der Kommunikationszone K1 bereitgestellt werden. Der Benutzer 18 kann diese Funktionen wie heute üblich über eine Vorauswahl, beispielsweise über die Schnittstelle 20, beispielsweise durch Drücken von physischen Schaltern oder durch Auswählen eines entsprechenden Menüpunkts, aktivieren.

Die Kommunikationszone K2 beinhaltet sämtliche Sensoren, Steuergeräte, das Bordnetz und weitere, für den Fahrbetrieb des Kraftfahrzeugs 10 benötigte Komponenten. Vor allem im Fall einer Drive-by-wire-Technologie bzw. beim pilotierten/automatisierten Führen des Kraftfahrzeugs 10 bildet dieser Bereich das Herzstück der Betriebssicherheit des Kraftfahrzeugs 10. In dieser Kommunikationszone K2 sind sicherheitsrelevante Steuergeräte und die erforderlichen Kennfelder untergebracht.

In der Kommunikationszone K3 werden bevorzugt Daten für Aufgaben bereitgestellt, die mit Dienstleistungen und dem damit erforderlichen Austausch von Geheimdaten 32 in Verbindung stehen, also etwa das automatisierte Bezahlen, Laden des Kraftfahrzeugs 10 mit elektrischer Energie und das Tanken. Als persönliche Daten 36 können hierbei beispielsweise auch Zugangsdaten für ein Konto vorgesehen sein, das ausschließlich für einen automatisierten Bezahlvorgang beim Tanken oder Aufladen vorgesehen sein kann. Hierzu muss der Benutzer dann nicht seine persönlichen Kontodaten seines eigentlichen Girokontos in der Speichereinrichtung 30 speichern.

In Bezug auf die Abfrage der TAN 40 ist eine mögliche Realisierung, dass dies ähnlich wie beim bekannten Online-Banking durchgeführt wird. Mit anderen Worten kann beispielsweise der Kraftfahrzeughersteller für das Kraftfahrzeug 10 einen gesicherten Ersatz von TAN für eine sichere Identifizierung zur Verfügung stellen. Die Verwendung von TAN und ähnlicher Authorisierungsmechanismen weist den zusätzlichen Vorteil auf, dass die Identifizierung anonym ist und für alle Bezahl- und Dienstleistungen verwendet werden kann. Nach Gebrauch einer bestimmten TAN oder nach Ablauf einer bestimmten Zeitspanne nach der Authorisierung einer TAN wechselt das Kraftfahrzeug 10 bevorzugt auf die nächste freie TAN.

Durch den virtuellen Schalter S ergibt sich ein zusätzlicher Selbstschutz des Kraftfahrzeugs 10 vor falschen Steuer-Daten. Wird eine Aktion durch die Überwachungseinrichtung 16 genehmigt, gelangen also neue Daten von der Kommunikationszone K1 in die Kommunikationszone K2. So existiert dennoch kein direkter Zugriff beispielsweise auf den Kennfeldspeicher 48 oder die übrigen Parameterspeicher der Sensoren 44 und Steuergeräte 46. Es können also nicht beliebige, und damit eventuell auch fehlerhafte Fahrzeug-Steuerdaten in den Komponenten 44, 46, 48 gespeichert werden. Anstelle eines direkten Zugriffs, um neue Kennfelder zu laden bzw. vorhandene Kennfelder zu ändern, werden durch den virtuellen Schalter S nur solche Kennfelder freigeschaltet, die vorab beispielsweise vom Kraftfahrzeughersteller oder durch einen Fachbetrieb in der Kommunikationszone K2 installiert wurden. Selbst wenn also auch ungewollt auf einen falschen Satz von Fahrzeug-Steuerdaten umgeschaltet wird, handelt es sich immer noch um solche Fahrzeug-Steuerdaten, die vom Kraftfahrzeughersteller bzw. Fachbetrieb fachmännisch geprüft worden sind.

Durch das erfindungsgemäße Kraftfahrzeug erfolgt eine Abschottung wichtiger Funktionen und Steuerbefehle gegen einen Zugriff von außerhalb des Kraftfahrzeugs. Durch das Kraftfahrzeug 10 wird die Bedienperson 18 durch eine gesicherte Identifizierung bei Transaktionen und Dienstleistungen unterstützt. Bietet ein Kraftfahrzeughersteller verschiedene Erweiterungen, beispielsweise zukaufbare Fahrdynamikpakete in Form von erweiterten Kennfeldern für die Kraftfahrzeugsteuerung an, so können diese bei der Herstellung des Kraftfahrzeugs 10 oder aber auch im Nachhinein sicher in dem Kraftfahrzeug 10 installiert bzw. aktiviert werden. Sie können dennoch nicht absichtlich oder zufällig in der Weise manipuliert werden, dass sich ein unsicheres Fahrverhalten des Kraftfahrzeugs 10 ergibt. Insgesamt wird dies prinzipiell dadurch erreicht, dass bei der Kommunikationszone K3 jeder Zugriff beispielsweise durch den Benutzer 18 bestätigt werden muss (Freigabe durch TAN/PIN-Eingabe) und im Zusammenhang mit der Kommunikationszone K2 die neuen Daten plausibilisiert werden. Dies kann in der beschriebenen Weise durch Speichern auswählbarer Kennfelder erfolgen oder aber auch durch eine Simulation des neu empfangenen Programmes, durch welche dann die Auswirkungen auf die Fahrzeugsteuerung erkannt werden können. Erst wenn die Simulation ein plausibles Fahrverhalten ergibt, wird dann der virtuelle Schalter S auf die neuen Daten umgeschaltet.

## Patentansprüche

1. Kraftfahrzeug (10) mit
- einer Kommunikationseinrichtung (22) für eine drahtlose Datenübertragung zwischen einerseits dem Kraftfahrzeug (10) und andererseits einem fahrzeugexternen Gerät (28) und/oder einem anderen Kraftfahrzeug,
- einer Prozessoreinrichtung (20), die dazu eingerichtet ist, Anwendungsprogramme in einer ersten Kommunikationszone (K1) auszuführen, die für einen Datenaustausch zwischen einerseits den Anwendungsprogrammen und andererseits dem fahrzeugexternen Gerät (28) und/oder dem anderen Kraftfahrzeug über die Kommunikationseinrichtung (22) ausgelegt ist, und
- einer Speichereinrichtung (42) für Fahrzeug-Steuerdaten, durch welche ein Fahrverhalten des Kraftfahrzeugs (10) festgelegt ist, wobei die Speichereinrichtung (42) in einer zweiten Kommunikationszone (K2) des Kraftfahrzeugs (10) angeordnet ist,
wobei die erste und die zweite Kommunikationszone (K1, K2) durch eine Überwachungseinrichtung (16) gekoppelt sind, die dazu ausgebildet ist, neue Daten, die ein Anwendungsprogramm von der ersten Kommunikationszone (K1) aus in die zweite Kommunikationszone (K2) zu übertragen versucht, nur dann in die zweite Kommunikationszone (K2) weiterzuleiten, falls die Überwachungseinrichtung (16) erkennt, r dass die neuen Daten zu einem durch ein vorgegebenes Sicherheitskriterium definierten sicheren Fahrverhalten des Kraftfahrzeugs (10) führen,
**dadurch gekennzeichnet, dass**
a) in dem Kraftfahrzeug (10) mehrerer vorinstallierte, auswählbare Kennfelder gespeichert sind und die Überwachungseinrichtung dazu ausgebildet ist, auf Grundlage der neuen Daten zumindest eines der vorinstallierten Kennfelder freizuschalten und hierdurch für eine Verwendung als Fahrzeug-Steuerdaten in den Kraftfahrzeug zu aktivieren, und/oder
b) die Überwachungseinrichtung (16) dazu ausgebildet ist, auf der Grundlage der neuen Daten eine Simulation eines sich durch die neuen Daten ergebenden Fahrverhaltens durchzuführen und die neuen Daten nur weiterzuleiten, falls sich gemäß einem vorbestimmten Plausibilitätskriterium ein zulässiges Fahrverhalten ergibt, und/oder
c) wobei in dem Kraftfahrzeug (10) eine mit der ersten Kommunikationszone (K1) über die Überwachungseinrichtung (16) gekoppelte dritte Kommunikationszone (K3) mit einem Speicher (30) für fahrzeug- und/oder personenbezogene Geheimdaten (32) für eine Online-Bezahlung und/oder für eine Online-Dienstleistung ausgebildet ist, wobei die Überwachungseinrichtung (16) dazu ausgebildet ist, einen Datenzugriff von der ersten in die dritte Kommunikationszone (K1, K3) nur mit einem gültigen Authentifizierungscode (40) zuzulassen.

2. Kraftfahrzeug (10) nach Anspruch 1, wobei die Überwachungseinrichtung (16) dazu ausgebildet ist, die neuen Daten mit zumindest einem im Kraftfahrzeug (10) abgelegten Rahmenkennfeld zu vergleichen und die Übertragung der neuen Daten zu blockieren, falls die neuen Daten bei einer Verwendung als Fahrzeug-Steuerdaten zu einem Steuerwert außerhalb eines durch das zumindest eine Rahmenkennfeld definierten zulässigen Bereiches führen würden.

3. Kraftfahrzeug (10) nach Anspruch 1 oder 2, wobei die zweite Kommunikationszone (K2) zumindest eine für einen Fahrbetrieb des Kraftfahrzeug nötige Komponente (44, 46, 48) umfasst, welche über die Überwachungseinrichtung (16) zum Empfangen der neuen Daten mit der ersten Kommunikationszone (K1) gekoppelt ist und welche die Speichereinrichtung (42) zumindest teilweise umfasst.

4. Kraftfahrzeug (10) nach Anspruch 3, wobei die zumindest eine Komponente (44, 46, 48) umfasst: ein fahrsicherheitsrelevantes Steuergerät (46), ein Steuergerät (46) für eine Fahrdynamikregelung, einen Kennfeldspeicher (48) für ein solches Steuergerät, einen Sensor (44), ein Bordnetz für eine Stromversorgung, ein Drive-By-Wire-Steuergerät (46), ein Steuergerät (46) für eine pilotierte und/oder autonome Fahrt.

5. Kraftfahrzeug (10) nach Anspruch 1, wobei die Überwachungseinrichtung (16) dazu ausgelegt ist, den Authentifizierungscode (40) von einer Bedienperson (18) über ein in der ersten Kommunikationszone (K1) ausgeführtes Anwendungsprogramm zu empfangen.

6. Kraftfahrzeug (10) nach Anspruch 1 oder 5, wobei die Überwachungseinrichtung (16) dazu ausgelegt ist, den Authentifizierungscode (40) von dem externen Gerät über die Kommunikationseinrichtung (22) zu empfangen.

7. Kraftfahrzeug (10) nach einem der Ansprüche 1 bis 6, wobei die Überwachungseinrichtung (16) dazu ausgelegt ist, den Authentifizierungscode (40) auf der Grundlage eines TAN-Verfahrens festzulegen.

8. Kraftfahrzeug (10) nach einem der Ansprüche 1 bis 7, wobei die Überwachungseinrichtung (16) dazu ausgelegt ist, den Authentifizierungscode (40) nach einem Gebrauch oder nach Ablauf einer bestimmten Zeitdauer zu wechseln.

9. Verfahren zum Überwachen eines Eingriffs in Fahrzeug-Steuerdaten, durch welche ein Fahrverhalten eines Kraftfahrzeugs (10) festgelegt ist, wobei
durch eine Überwachungseinrichtung (16) eine Verbindung zwischen einer ersten Kommunikationszone (K1), in welcher ein Anwendungsprogramm ausgeführt wird, das neue Daten für eine Veränderung der Fahrzeug-Steuerdaten bereitstellt, und einer zweiten Kommunikationszone (K2), in welcher die Fahrzeug-Steuerdaten in einer Speichereinrichtung (42) gespeichert sind, überwacht wird, und bei Erkennen eines Übertragungsversuchs der neuen Daten von der ersten in die zweite Kommunikationszone (K1, K2) die neuen Daten daraufhin durch die Überwachungseinrichtung (16) überprüft werden, ob sich bei Verwendung der neuen Daten als Fahrzeug-Steuerdaten ein durch ein Sicherheitskriterium definiertes sicheres Fahrverhalten des Kraftfahrzeugs (10) ergibt, und durch die Überwachungseinrichtung die Übertragung nur zugelassen wird, falls die neuen Daten das Sicherheitskriterium erfüllen,
**dadurch gekennzeichnet, dass**
a) in dem Kraftfahrzeug (10) mehrerer vorinstallierte, auswählbare Kennfelder gespeichert sind und die Überwachungseinrichtung auf Grundlage der neuen Daten zumindest eines der vorinstallierten Kennfelder freischaltet und hierdurch für eine Verwendung als Fahrzeug-Steuerdaten in den Kraftfahrzeug aktiviert, und/oder
b) die Überwachungseinrichtung (16) auf der Grundlage der neuen Daten eine Simulation eines sich durch die neuen Daten ergebenden Fahrverhaltens durchführt und die neuen Daten nur weiterleitet, falls sich gemäß einem vorbestimmten Plausibilitätskriterium ein zulässiges Fahrverhalten ergibt, und/oder
c) wobei in dem Kraftfahrzeug (10) eine mit der ersten Kommunikationszone (K1) über die Überwachungseinrichtung (16) gekoppelte dritte Kommunikationszone (K3) mit einem Speicher (30) für fahrzeug- und/oder personenbezogene Geheimdaten (32) für eine Online-Bezahlung und/oder für eine Online-Dienstleistung ausgebildet ist, wobei die Überwachungseinrichtung (16) dazu ausgebildet ist, einen Datenzugriff von der ersten in die dritte Kommunikationszone (K1, K3) nur mit einem gültigen Authentifizierungscode (40) zuzulassen.

10. Verfahren zum Überwachen eines Eingriffs in Fahrzeug-Steuerdaten nach Anspruch 9, **dadurch gekennzeichnet, dass**
die Überwachungseinrichtung (16) die neuen Daten mit zumindest einem im Kraftfahrzeug (10) abgelegten Rahmenkennfeld vergleicht und die Übertragung der neuen Daten blockiert, falls die neuen Daten bei einer Verwendung als Fahrzeug-Steuerdaten zu einem Steuerwert außerhalb eines durch das zumindest eine Rahmenkennfeld definierten zulässigen Bereiches führen würden.

## Claims

1. Motor vehicle (10) comprising
- a communication device (22) for a wireless data transmission between, on the one hand, the motor vehicle (10) and, on the other hand, a vehicle-external appliance (28) and/or another motor vehicle,
- a processor device (20) configured to execute application programs in a first communication zone (K1), which is configured to perform, using the communication device (22), a data interchange between, on the one hand, the application programs and, on the other hand, the vehicle-external appliance (28) and/or the other vehicle, and
- a memory device (42) for vehicle control data that stipulate a driving behaviour of the motor vehicle (10), wherein the memory device (42) is arranged in a second communication zone (K2) of the motor vehicle (10),
wherein the first and second communication zones (K1, K2) are coupled via a monitoring device (16) which is configured to forward to the second communication zone (K2) new data that an application program attempts to transmit from the first communication zone (K1) to the second communication zone (K2), only if the monitoring device (16) recognises that the new data result in a safe driving behaviour of the motor vehicle (10) that is defined by a prescribed safety criterion,
**characterized in that**
a) a plurality of preinstalled, selectable characteristic maps is stored in the motor vehicle (10) and the monitoring device is configured, on the basis of the new data, to enable and so activate at least one of the preinstalled characteristic maps for use as vehicle control data in the motor vehicle, and/or
b) the monitoring device (16) is configured, on the basis of the new data, to perform a simulation for a driving behaviour that results from the new data and to forward the new data only if an admissible driving behaviour is obtained in accordance with a predetermined plausibility criterion, and/or
c) wherein, in the motor vehicle (10), a third communication zone (K3) coupled to the first communication zone (K1) via the monitoring device (16) is provided, the third communication zone having a memory (30) for vehicle-related and/or person-related secret data (32) for an online payment and/or for an online service, wherein the monitoring device (16) is configured to permit data access from the first to the third communication zone (K1, K3) only with a valid authentication code (40).

2. Motor vehicle (10) according to claim 1, wherein the monitoring device (16) is configured to compare the new data with at least one framework characteristic map stored in the motor vehicle (10) and to block transmission of the new data if the new data, when used as vehicle control data, would result in a control value outside an admissible range defined by the at least one framework characteristic map.

3. Motor vehicle (10) according to claim 1 or 2, wherein the second communication zone (K2) comprises at least one component (44, 46, 48) required for driving the motor vehicle that is coupled to the first communication zone (K1) via the monitoring device (16) for receiving the new data and that at least partially comprises the memory device (42).

4. Motor vehicle (10) according to claim 3, wherein the at least one component (44, 46, 48) comprises: a driving-safety-relevant controller (46), a controller (46) for driving dynamics control, a map memory (48) for such a controller, a sensor (44), an onboard power supply system for supplying power, a drive-by-wire controller (46), a controller (46) that controls piloted driving and/or automatic driving.

5. Motor vehicle (10) according to claim 1, wherein the monitoring device (16) is configured to receive the authentication code (40) from an operator (18) via an application program executed in the first communication zone (K1).

6. Motor vehicle (10) according to claim 1 or 5, wherein the monitoring device (16) is configured to receive the authentication code (40) from the external appliance via the communication device (22).

7. Motor vehicle (10) according to any of claims 1 to 6, wherein the monitoring device (16) is configured to stipulate the authentication code (40) based on a TAN method.

8. Motor vehicle (10) according to any of claims 1 to 7, wherein the monitoring device (16) is configured to change the authentication code (40) after a use or after a particular period of time has elapsed.

9. Method for monitoring an action on vehicle control data that stipulate a driving behaviour of a motor vehicle (10), wherein
using a monitoring device (16), a connection between a first communication zone (K1), in which an application program is executed that provides new data for altering the vehicle control data, and a second communication zone (K2), in which the vehicle control data are stored in a memory device (42), is monitored, and after recognizing an attempt to transmit the new data from the first to the second communication zone (K1, K2), the new data are checked by the monitoring device (16) for whether use of the new data as vehicle control data will result in a safe driving behaviour of the motor vehicle (10) that is defined by a safety criterion, and transmission is only permitted by the monitoring device if the new data comply with the safety criterion,
**characterized in that**
a) a plurality of preinstalled, selectable characteristic maps is stored in the motor vehicle (10) and the monitoring device enables and activates, on the basis of the new data, at least one of the preinstalled characteristic maps for use as vehicle control data in the motor vehicle, and/or
b) the monitoring device (16) performs, on the basis of the new data, a simulation for a driving behaviour that results from the new data and forwards the new data only if an admissible driving behaviour is obtained in accordance with a predetermined plausibility criterion, and/or
c) wherein, in the motor vehicle (10), a third communication zone (K3) coupled to the first communication zone (K1) via the monitoring device (16) is provided, the third communication zone having a memory (30) for vehicle-related and/or person-related secret data (32) for an online payment and/or for an online service, wherein the monitoring device (16) is configured to permit data access from the first to the third communication zone (K1, K3) only with a valid authentication code (40).

10. Method for monitoring an action on vehicle control data according to claim 9,
**characterized in that**
the monitoring device (16) compares the new data with at least one framework characteristic map stored in the motor vehicle (10) and blocks transmission of the new data if the new data, when used as vehicle control data, would result in a control value outside an admissible range defined by the at least one framework characteristic map.

## Revendications

1. Véhicule automobile (10) comprenant
- un dispositif de communication (22) pour une transmission de données sans fil entre d'une part le véhicule automobile (10) et d'autre part un appareil (28) externe au véhicule et/ou un autre véhicule automobile,
- un dispositif processeur (20) qui est mis au point pour exécuter des programmes d'application dans une première zone de communication (K1), qui est configurée pour un échange de données entre d'une part les programmes d'application et d'autre part l'appareil (28) externe au véhicule et/ou l'autre véhicule automobile par l'intermédiaire du dispositif de communication (22), et
- un dispositif à mémoire (42) pour des données de commande de véhicule, par lesquelles un comportement de conduite du véhicule automobile (10) est fixé, dans lequel le dispositif à mémoire (42) est disposé dans une deuxième zone de communication (K2) du véhicule automobile (10),
dans lequel la première et la deuxième zone de communication (K1, K2) sont couplées par un dispositif de surveillance (16), qui est réalisé pour transférer de nouvelles données, qu'un programme d'application tente de transmettre de la première zone de communication (K1) dans la deuxième zone de communication (K2), alors seulement dans la deuxième zone de communication (K2) si le dispositif de surveillance (16) identifie que les nouvelles données conduisent à un comportement de conduite du véhicule automobile (10) sûr défini par un critère de sécurité spécifié,
**caractérisé en ce que**
a) plusieurs champs caractéristiques préinstallés, sélectionnables sont mémorisés dans le véhicule automobile (10) et le dispositif de surveillance est réalisé afin de débloquer, sur la base des nouvelles données, au moins un des champs caractéristiques préinstallés et de l'activer de ce fait en vue d'une utilisation en tant que données de commande de véhicule dans le véhicule automobile, et/ou
b) le dispositif de surveillance (16) est réalisé afin de mettre en oeuvre, sur la base des nouvelles données, une simulation d'un comportement de conduite résultant des nouvelles données et de transférer les nouvelles données seulement s'il ressort, selon un critère de plausibilité prédéterminé, un comportement de conduite admissible, et/ou
c) dans lequel une troisième zone de communication (K3) couplée à la première zone de communication (K1) par l'intermédiaire du dispositif de surveillance (16), pourvue d'une mémoire (30) pour des données confidentielles (32) en lien avec le véhicule et/ou à caractère personnel pour un paiement en ligne et/ou pour un service en ligne est réalisée dans le véhicule automobile (10), dans lequel le dispositif de surveillance (16) est réalisé afin d'autoriser un accès aux données de la première dans la troisième zone de communication (K1, K3) seulement avec un code d'authentification (40) valide.

2. Véhicule automobile (10) selon la revendication 1, dans lequel le dispositif de surveillance (16) est réalisé afin de comparer les nouvelles données à au moins un champ caractéristique cadre enregistré dans le véhicule automobile (10) et afin de bloquer la transmission des nouvelles données si les nouvelles données conduisaient, dans le cas d'une utilisation en tant que données de commande de véhicule, à une valeur de commande en dehors d'une plage admissible définie par l'au moins un champ caractéristique de cadre.

3. Véhicule automobile (10) selon la revendication 1 ou 2, dans lequel la deuxième zone de communication (K2) comprend au moins un composant (44, 46, 48) utile pour un mode de conduite du véhicule automobile, lequel est couplé, par l'intermédiaire du dispositif de surveillance (16), afin de recevoir les nouvelles données, à la première zone de communication (K1) et qui comprend au moins en partie le dispositif à mémoire (42).

4. Véhicule automobile (10) selon la revendication 3, dans lequel l'au moins un composant (44, 46, 48) comprend : un appareil de commande (46) important en matière de sécurité de conduite, un appareil de commande (46) pour une régulation dynamique de conduite, une mémoire de champ caractéristique (48) pour un appareil de commande de ce type, un capteur (44), un réseau de bord pour une alimentation en courant, un appareil de commande drive-by-wire (46), un appareil de commande (46) pour une conduite pilotée et/ou autonome.

5. Véhicule automobile (10) selon la revendication 1, dans lequel le dispositif de surveillance (16) est configuré afin de recevoir le code d'authentification (40) d'une personne utilisatrice (18) par l'intermédiaire d'un programme d'application exécuté dans la première zone de communication (K1).

6. Véhicule automobile (10) selon la revendication 1 ou 5, dans lequel le dispositif de surveillance (16) est configuré afin de recevoir le code d'authentification (40) d'un appareil externe par l'intermédiaire du dispositif de communication (22).

7. Véhicule automobile (10) selon l'une quelconque des revendications 1 à 6, dans lequel le dispositif de surveillance (16) est configuré afin de fixer le code d'authentification (40) sur la base d'un procédé TAN (à numéro de transaction).

8. Véhicule automobile (10) selon l'une quelconque des revendications 1 à 7, dans lequel le dispositif de surveillance (16) est configuré afin de changer le code d'authentification (40) après une utilisation ou à l'expiration d'une période déterminée.

9. Procédé servant à surveiller toute manipulation des données de commande de véhicule, par lesquelles un comportement de conduite d'un véhicule automobile (10) est fixé, dans lequel
une liaison entre une première zone de communication (K1), dans laquelle est exécuté un programme d'application qui fournit de nouvelles données en vue d'une modification des données de commande de véhicule, et une deuxième zone de communication (K2), dans laquelle les données de commande de véhicule sont mémorisées dans un dispositif à mémoire (42), est surveillée par un dispositif de surveillance (16), et en cas d'identification d'une tentative de transmission des nouvelles données de la première dans la deuxième zone d'identification (K1, K2), les nouvelles données sont surveillées par le dispositif de surveillance (16) pour savoir si en cas d'utilisation des nouvelles données en tant que données de commande de véhicule, il résulte un comportement de conduite du véhicule automobile (10) sûr défini par un critère de sécurité, et la transmission est seulement autorisée par le dispositif de surveillance si les nouvelles données remplissent le critère de sécurité,
**caractérisé en ce que**
a) plusieurs champs caractéristiques préinstallés, sélectionnables sont mémorisés dans le véhicule automobile (10) et le dispositif de surveillance est réalisé afin de débloquer, sur la base des nouvelles données, au moins un des champs caractéristiques préinstallés et de l'activer de ce fait en vue d'une utilisation en tant que données de commande de véhicule dans le véhicule automobile, et/ou
b) le dispositif de surveillance (16) est réalisé afin de mettre en oeuvre, sur la base des nouvelles données, une simulation d'un comportement de conduite résultant des nouvelles données et de transférer les nouvelles données seulement s'il ressort, selon un critère de plausibilité prédéterminé, un comportement de conduite admissible, et/ou
c) dans lequel une troisième zone de communication (K3) couplée à la première zone de communication (K1) par l'intermédiaire du dispositif de surveillance (16), pourvue d'une mémoire (30) pour des données confidentielles (32) en lien avec le véhicule et/ou à caractère personnel pour un paiement en ligne et/ou pour un service en ligne est réalisée dans le véhicule automobile (10), dans lequel le dispositif de surveillance (16) est réalisé afin d'autoriser un accès aux données de la première dans la troisième zone de communication (K1, K3) seulement avec un code d'authentification (40) valide.

10. Procédé servant à surveiller toute manipulation de données de commande de véhicule selon la revendication 9, **caractérisé en ce que**
le dispositif de surveillance (16) compare les nouvelles données à au moins un champ caractéristique cadre enregistré dans le véhicule automobile (10) et bloque la transmission des nouvelles données si les nouvelles données conduisaient, en cas d'une utilisation en tant que données de commande de véhicule, à une valeur de commande en dehors d'une plage autorisée définie par l'au moins un champ caractéristique cadre.
